# EUROPEAN PATENT SPECIFICATION

(11) **EP 3 006 249 B1**
(45) Date of publication and mention of the grant of the patent: **05.10.2016**
(21) Application number: 14187791.0
(22) Date of filing: 06.10.2014
(51) Int. Cl.: B60K 11/04, B62D 35/02

(54) **An under-body aerodynamic device for a motor-vehicle**
Eine unterkörper aerodynamische Vorrichtung für ein Kraftfahrzeug
Dispositif aérodynamique sous-corps pour un véhicule à moteur

(43) Date of publication of application: 13.04.2016
(73) Proprietor: C.R.F. Società Consortile per Azioni, 10043 Orbassano (Torino) (IT)
(72) Inventor: Miretti, Luca, I-10043 Orbassano (Torino) (IT); Ribaldone, Enrico Modesto, I-10043 Orbassano (Torino) (IT); Sandri, Silvano, I-10043 Orbassano (Torino) (IT); Scantamburlo, Dario, I-10043 Orbassano (Torino) (IT)
(74) Representative: Notaro, Giancarlo

(56) References cited:
- EP-A1- 1 541 452
- US-A- 4 460 213
- US-A1- 2004 113 457
- US-A1- 2009 295 190
- US-A1- 2011 095 563

## Description

The present invention relates to an aerodynamic device provided under the body of a motor-vehicle, comprising a panel structure arranged under the front part of a motor-vehicle body and movable between a raised position and a lowered position.

An aerodynamic device of this type is known for example from any of documents US-A-4 770 457, DE 4 208 999 A1, DE 10 2011 085933 A1. A similar device is also known from US 8 731 781 B2. The main advantage of such aerodynamic devices is that of reducing the gap between the lower surface of the motor-vehicle and the road, in order to generate an aerodynamic effect causing a negative pressure which presses the vehicle onto the road. This effect is particularly advantageous when the vehicle has a speed greater than a threshold value. At the same time, the panel structure can be maintained in a raised position when the vehicles moves instead at a relatively low speed and/or in case of an irregular road profile.

An aerodynamic device according to the preamble of claim 1 is known from US 2004/0113457 A1.

The object of the present invention is that of providing an aerodynamic device of the above indicated type which on one hand ensures the above described aerodynamic advantages to a great extent and at the same time has a simple and functional structure.

A further object of the invention is that of providing a device of the above indicated type which can be provided with simple operations on a motor-vehicle originally not provided with this device.

In view of achieving these objects, the invention provides an aerodynamic device having the features indicated **in claim 1.**

In a preferred embodiment, **the** spring which biases the main panel towards its lowered position is a leaf spring arranged transversally with respect to the longitudinal direction of the motor-vehicle and having its central part rigidly connected to the motor-vehicle structure and its ends cooperating with **the** main panel. In this embodiment, **the** winding shaft is provided with two winding cables which can be wound on the opposite ends of said shaft and connected to the ends of said leaf spring and/or to said main panel.

Due to said features, the structure of device is extremely simple and inexpensive. The configuration of the device enables, in the lowered condition of the device, a surface profile to be obtained which is such as to ensure the best results in terms of negative pressure effect generated under the motor-vehicle. To this end, according to a preferred feature, said main panel has a longitudinal length which is many times greater than the longitudinal length of the front spoiler. For example, the longitudinal length of the main panel may amount to more than 6-7 times the longitudinal length of the front spoiler.

According to a further feature, the main panel is provided with an aperture to which there is associated a shutter panel movable from an opened position to a closed position in which it closes said aperture, as a result of a movement of the main panel towards its lowered position. In this manner, when the main panel is at its raised position, in which it comes to be adjacent to the exhaust conduit of the motor-vehicle, said aperture provides ventilation for the upper surface of the panel.

Also in the case of the preferred embodiment, said shutter panel is slidably mounted on the main panel between its closed position and its opened position and is biased towards its closed position by spring means interposed between the shutter panel and the main panel. In this embodiment, the winding shaft is provided with at least an auxiliary cable connected to the shutter panel for pulling said shutter panel towards its opened position against the action of said spring means which are associated with the shutter panel.

The electric motor for operating the winding shaft is controlled by the motor-vehicle electronic control unit on the basis of a pre-determined program, depending upon the operative conditions of the motor-vehicle, particularly for example depending upon the speed of the motor-vehicle. When the speed is greater than a threshold value the main panel is located at its lowered position, in which it is held by said leaf spring. In this condition the main panel itself holds also the front spoiler in its lowered position. When the speed decreases below said threshold value and/or in case of a positive command from the driver (for example in case of road irregularities) the electric motor for operating the winding shaft is activated so as to cause winding of the lifting cables for lifting the main panel, which is then brought to its raised position, against the action of the leaf spring. At the same time, the winding of the cable, or cables, for actuating the shutter panel causes movement of the latter to its opened position, so as to provide air ventilation for the upper surface of the main panel when the latter is located at its raised position, adjacent to the exhaust conduit of the motor-vehicle. When the speed of the motor-vehicle increases again above said threshold value, the electric motor is activated for the time necessary to unwind the cables until the device is brought back to its lowered configuration with the shutter panel closed, under the action of the return springs associated with the main panel and the shutter panel.

Therefore, the aerodynamic device according to the invention provides the desired aerodynamic effect while ensuring the integrity of the device in any travel conditions. The structure of the device is relatively simple and inexpensive and is configured so as to be applicable easily on motor-vehicles which originally are not provided with it.

Further features and advantages of the invention will become apparent from the following description with reference to the annexed drawings, given purely by way of non-limiting example, in which:
- figure 1 is a perspective view of a preferred embodiment of the device according to the present invention, which shows the device in its lowered position,
- figure 2 is a perspective view which shows the device in a raised condition,
- figures 3, 4 are diagrammatic lateral views, in cross-section, of the device according to the invention, in its raised position and its lowered position, respectively,
- figure 5 is a further perspective view of the device in its lowered condition,
- figure 6 shows a detail of figure 5 at an enlarged scale,
- figure 7 is a further perspective view of the device according to the invention shown in its raised condition, and
- figure 8 shows a detail of figure 7 at an enlarged scale.

With reference to the drawings, numeral 1 generally designates an aerodynamic device provided under the body of a motor-vehicle, comprising a panel structure 2 consisting of a front spoiler 3 and a main panel 4. The material constituting the front spoiler and the main panel may be metal material, plastic material, or also composite material, including a plastic resin reinforced with fibres.

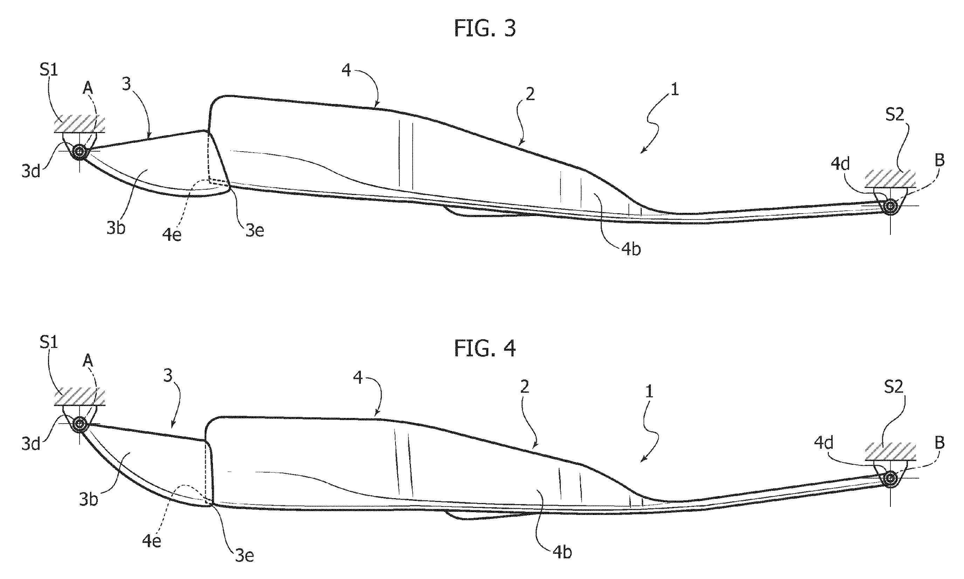

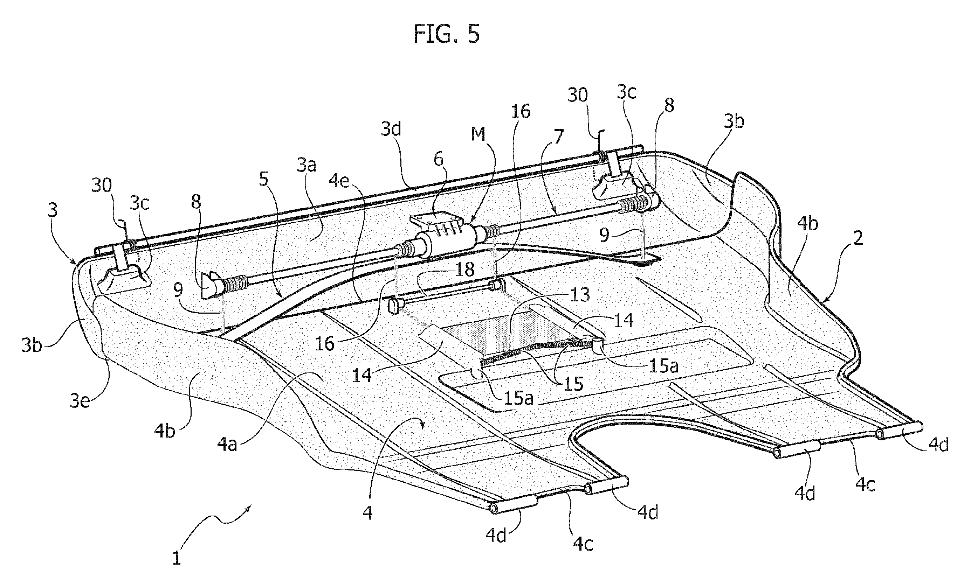

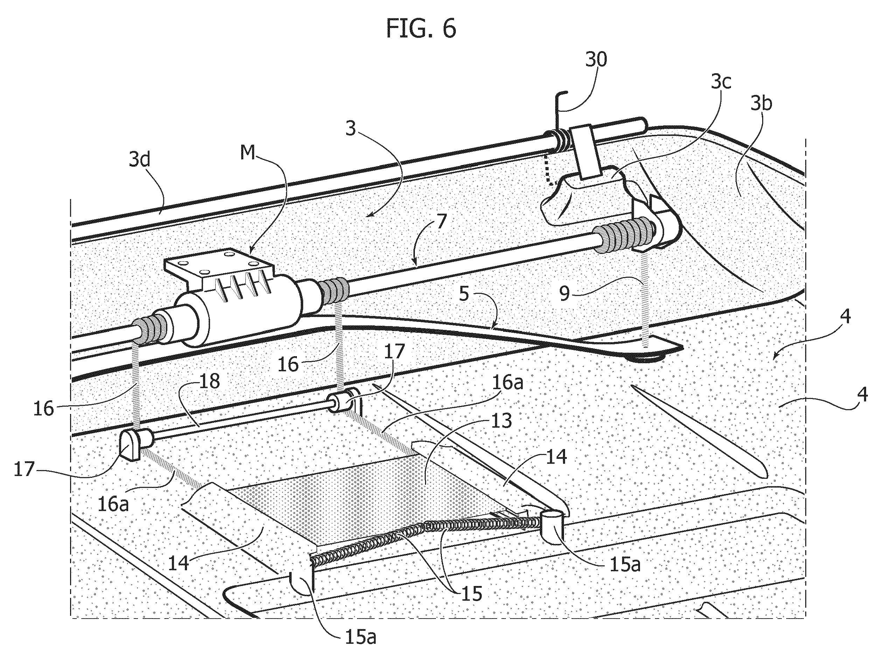

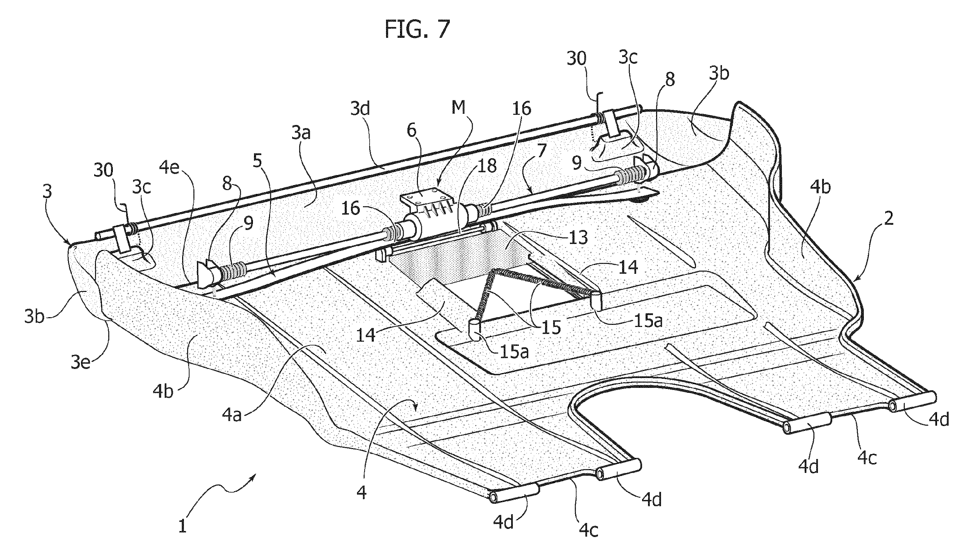

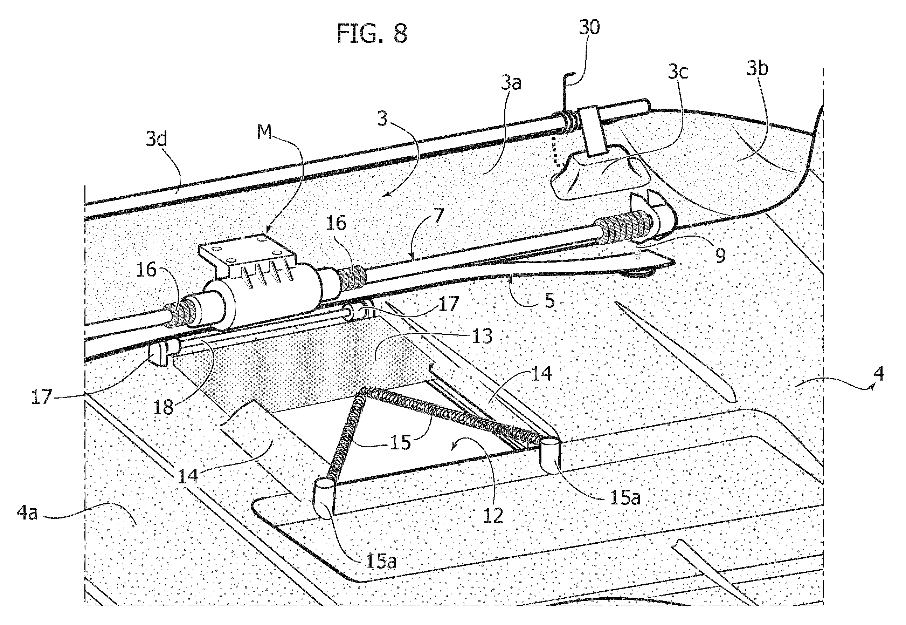

As better shown in figures 3, 4 and figures 5, 7, the front spoiler 3 is in form of a shell extending transversally with respect to the longitudinal direction of the motor-vehicle and having a reduced longitudinal length, so that this front spoiler comes to be located at the area in front of the front wheels of the motor-vehicle. As shown in figures 5, 7, spoiler 3 has a main wall 3a having a profile arched downwardly (see figure 3) as well as two lateral walls 3b connected to the main wall 3a for guiding the air flow on the two sides of the device. The front spoiler 3 is provided at its upper surface with brackets 3c which support a transverse rod 3d, having a circular cross-section and serving for pivotally mounting the front spoiler 3 around a transverse axis A (see figure 3, 4) onto the motor-vehicle structure, namely, in this case, on the structure S1 (shown diagrammatically in figures 3, 4) of the motor-vehicle bumper. Also with reference to figures 5, 7, to rod 3d of the front spoiler 3 there are associated two spiral springs 30 (shown only partially in figures 6 and 8) which are interposed between the structure of the front spoiler 3 and the structure of the bumper and are adapted to push the front spoiler 3 towards the upwardly rotated position which is shown in figure 4.

The main panel 4 forming part of the device according to the invention has a bottom main wall 4a and two lateral walls 4b. The panel has a rear edge 4c defining a plurality of eyelets 4d for pivotally mounting the main panel 4 around the transverse axis B (see figures 3, 4) onto the motor-vehicle structure, for example on a frame S2 (shown only diagrammatically in figures 3, 4) secured to the motor-vehicle body and carrying the mechanical components of the front suspension.

As clearly shown in figures 3, 4, 7, the front edge 4e of panel 4 is positioned above the rear edge 3e of the front spoiler 3, so that the main panel 4 acts as a stop for limiting the upward movement of the front spoiler 3. Similarly, the lateral walls 4b of the main panel 4 are arranged at the inside of the lateral walls 3b of the front spoiler 3 (see figures 5, 7).

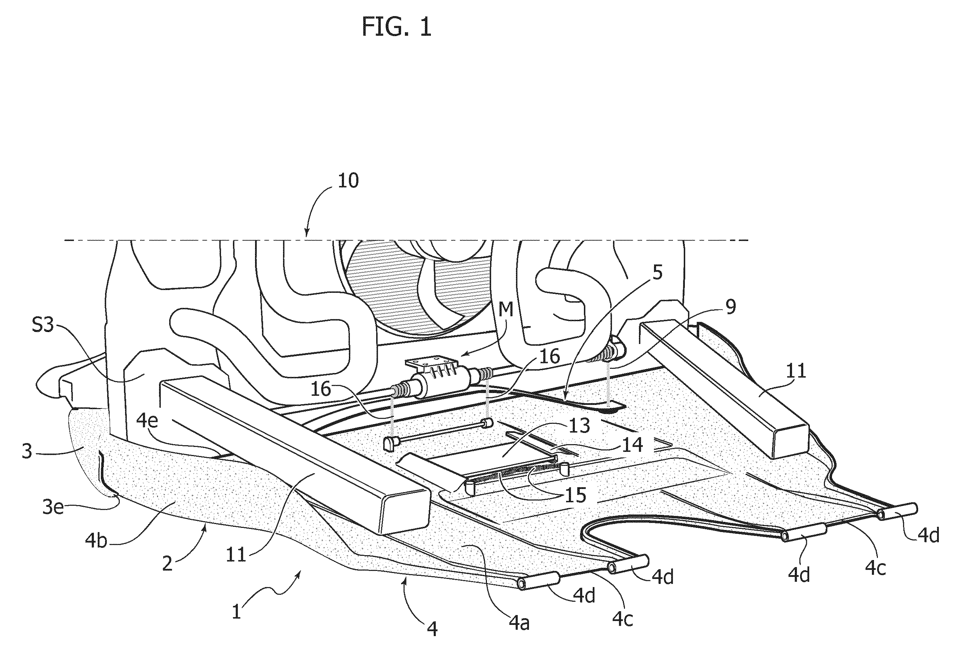

In the illustrated embodiment, the main panel 4 is biased towards a downwardly rotated position by a leaf spring 5 (see figures 5-8). The leaf spring 5 has its central part rigidly connected to the motor-vehicle structure, and specifically in the case of the illustrated example, to a frame S3 (figure 1) supporting the radiator unit 10 of the motor-vehicle. The ends of the leaf spring 5 are instead operatively connected to the main panel 4, for example by engagement of pins carried by panel 4 within slots formed within the leaf spring 5.

As indicated, the leaf spring 5 normally holds the main panel 4, and hence the front spoiler 3, in the lowered positions. The device can be brought to a raised position by activating an electric motor M whose structure is carried by a flange 6 (figure 5) secured, for example by means of screws (not shown), to the motor-vehicle structure, in this specific case to frame S3.

The electric motor M is of a type having a shaft extending through the structure of the motor and projecting from both opposites sides of the motor. This shaft, designated by reference 7, extends along a direction transverse with respect to the longitudinal direction of the motor-vehicle and is rotatably supported at its ends by two brackets 8 secured to the motor-vehicle structure, for example to frame S3. Shaft 7 acts as a winding shaft for winding two lifting cables 9 connected to the ends of the leaf spring 5 and/or to the main panel 4, so that winding of cables 9 on shaft 7 causes lifting of the front object of the main panel 4, against the action of the leaf spring 5. The lifting movement of the main panel 4 causes also lifting of the front spoiler 4, which is kept in contact with the main panel 4 by its return spring means 30.

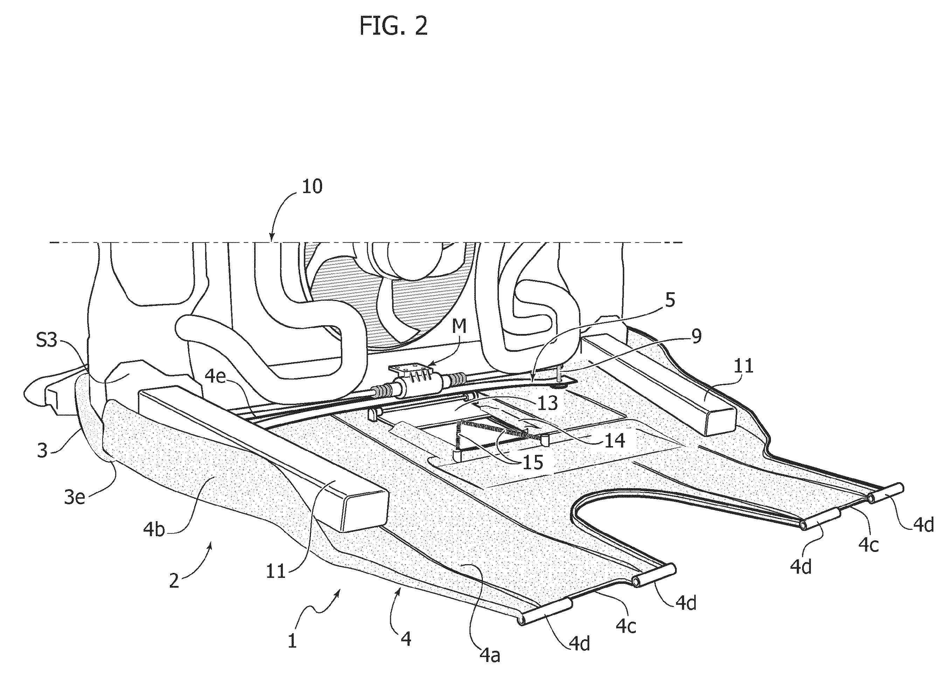

Figure 7 of the annexed drawings shows panel 4 in its raised condition. The raised condition and the lowered condition of the device according to the invention are also shown in figures 1, 2, which show some parts of the motor-vehicle adjacent to the device, and in particular the unit 10 including the motor-vehicle radiator and the fan associated therewith, as well as to two struts 11 which are to be interposed between the body of the motor-vehicle and a front supporting structure adapted to absorb impact energy, to which the motor-vehicle bumper and the radiator-supporting frame are connected. These components are not described here in detail, since they can be made in any known way and do not fall, taken alone, within the scope of the present invention.

When the main panel 4 is in its raised position, shown in figures 2, 3, 7 and 8, it comes to be adjacent to the motor-vehicle exhaust conduit (not shown in the drawings) and therefore could be subjected to an excessive heating. In order to provide air ventilation for the upper surface of panel 4, this panel has a central aperture 12 to which there is associated a shutter panel 13 slidably mounted between guides 14 of panel 4 so as to be movable between a closed position, for closing aperture 12 (see figures 5, 6) and an opened position, in which aperture 12 is unobstructed (see figures 7, 8). Two helical springs 15 which connect the central part of the rear edge of the shutter panel 13 to two brackets 15a, arranged adjacent to the ends of the rear edge of aperture 12, tend to hold the shutter panel 13 in its closed position, in which aperture 12 is closed. Starting from this closed position, the shutter panel 13 can be pulled towards its opened position, against the action of springs 15, by two cables 16 which are wound on shaft 7 at positions closer to motor M, with respect to the two end cables 9.

In this manner, when the device 1 according to the invention is in its lowered configuration, the leaf spring 5 holds the main panel 4, and hence the front spoiler 3, in their lowered position and the springs 15 hold the shutter panel 13 in its closed position, in which aperture 12 is closed. When the electric motor M is activated for causing lifting of device 1, the lifting cables 9 cause lifting of the main panel 4, and hence of the front spoiler 3, which is elastically biased against the main panel 4. At the same time, cables 16 cause the movement of the shutter panel 13 towards its opened position, so that when the main panel 4 is in its raised position adjacent to the motor-vehicle exhaust conduit, the aperture 12 provides ventilation for the upper surface of the panel 4.

Lastly, when it is necessary to bring the device 1 back to its lowered configuration, the electric motor M is again activated so as to unwind cables 9 and 16 and allow thereby that leaf spring 5 pushes the main panel 4 towards its lowered position, while springs 15 bias the shutter panel 13 towards its closed position in which aperture 12 is closed. The lowered position of device 1 is determined by the length reached by cables 9 when they are unwound from shaft 7 once the electric motor M is again stopped.

As clearly apparent, furthermore, in the device according to the invention a single actuator device simultaneously controls a position of the front spoiler 3 and that of the main panel 4 as well as the position of the shutter panel 13.

The load of the leaf spring 5 is selected so as to ensure stability of the position of the device in its lowered condition, whichever is the aerodynamic load acting thereon. Furthermore, preferably when the device is in its raised position, the main panel 4 is kept by cables 9 pressed against elastic supports on the body (not shown) in order to ensure, also in this case, a stability of the position during travel of the motor-vehicle.

As clearly shown in figure 6, the two cables 16 which are unwound from shaft 7 have the ends engaged around two pulleys 17 carried by a shaft 18 which is freely rotatably mounted between two brackets connected to the structure of panel 4. The ends of cables 16 extend into two portions 16a directed parallel to panel 4 and connected to the shutter panel 13, so as to ensure application of a tensile force onto panel 13 directed parallel to its sliding direction.

As clearly apparent from the foregoing description, the device according to the invention has a simple, efficient and functional structure. The device can be adapted with simple operations also on motor-vehicles for which it was not provided originally.

Naturally, while the principle of the invention remains the same, the details of construction and the embodiments may widely vary with respect to what has been described and illustrated purely by way of example, without departing from the scope of the present invention as defined in the appended claims.

## Claims

1. Aerodynamic device (1) for a motor-vehicle, comprising a panel structure (2) arranged under the front part of the body of a motor-vehicle and movable between a raised position and a lowered position, in which said panel structure (2) includes a front spoiler (3) pivotally mounted around a transverse axis (A) on the motor-vehicle structure, said front spoiler (3) being elastically biased towards a raised position,
**characterized in that** said front spoiler (3) is pivotally mounted around said transverse axis (A) adjacent to its front edge, and **in that** said panel structure (2) further includes:
- a main panel (4), having a front edge (4e) in engagement over a rear edge (3e) of the front spoiler (3), so as to act as a stop for the upward movement of the front spoiler (3) and a rear edge (4c) pivotally mounted around a transverse axis (B) on the motor-vehicle structure,
- a spring (5) interposed between the motor-vehicle structure and said main panel (4), tending to push said main panel (4) and hence also said front spoiler (3) towards a lowered position,
- a winding shaft (7) for winding lifting cables (9) for lifting said front panel (4), said shaft being rotatably mounted under the vehicle body around a transverse axis and being controlled by an electric motor (M), for biassing said main panel (4) towards a raised position, against the action of said spring (5).

2. Device according to claim 1, **characterized in that** said spring (5) is a leaf spring arranged transversally with respect to the longitudinal direction of the motor vehicle and having its central part connected rigidly to the motor-vehicle structure and its ends cooperating with said main panel (4).

3. Device according to claim 2, **characterized in that** said shaft (7) is provided for winding two lifting cables (9) connected to the ends of said leaf spring (5) and/or to said main panel (4).

4. Device according to claim 1, **characterized in that** said main panel (4) is provided with an aperture (12) to which there is associated a shutter panel (13) movable from an opened position to a closed position and, for closing said aperture (12), as a result of the movement of the main panel (4) towards its lowered position.

5. Device according to claim 4, **characterized in that** said shutter panel is slidably mounted on the main panel (4) between its closed position and its opened position, said shutter panel (13) being biassed towards its closed position by spring means (15) interposed between said shutter panel and the main panel (4), said winding shaft being provided with at least one auxiliary cable (16) connected to said shutter panel (13) for pulling said shutter panel (13) towards its opened position, against the action of said spring means (15).

6. Device according to claim 5, **characterized in that** said at least one auxiliary cable (16) connected to the shutter panel (13) is engaged on a re-directing pulley (17) and has an end portion (16a) connected to the shutter panel (13) and directed parallel to the shutter panel (4).

7. Device according to claim 5, **characterized in that** said main panel (4) has a longitudinal length substantially greater than the longitudinal length of the front spoiler (3).

8. Device according to claim 1, **characterized in that** said front spoiler (3) is adapted to be mounted on the front bumper (S1) of the motor-vehicle.

9. Device according claim 1, **characterized in that** said main panel (4) is adapted to be mounted on a frame (S2) connected to the motor-vehicle body and carrying the components of the motor-vehicle front suspension.

10. Device according to claim 1, **characterized in that** said spring (5) and said electric motor are adapted to be mounted on a frame (S3) carrying the radiator of the motor-vehicle cooling system.

## Patentansprüche

1. Aerodynamische Vorrichtung (1) für ein Kraftfahrzeug, umfassend eine Plattenstruktur (2), die unter dem vorderen Teil der Karosserie eines Kraftfahrzeugs angeordnet ist und zwischen einer angehobenen Position und einer abgesenkten Position beweglich ist, wobei die Plattenstruktur (2) einen Frontspoiler (3) umfasst, der um eine Querachse (A) schwenkbar an der Kraftfahrzeugstruktur montiert ist, wobei der Frontspoiler (3) elastisch in Richtung auf eine angehobene Position vorgespannt ist,
**dadurch gekennzeichnet, dass** der Frontspoiler (3) angrenzend an seine vordere Kante um die Querachse (A) schwenkbar montiert ist und dass die Plattenstruktur (2) ferner Folgendes umfasst:
- eine Hauptplatte (4), die Folgendes aufweist: eine vordere Kante (4e), die über eine hintere Kante (3e) des Frontspoilers (3) greift, um als Anschlag für die Aufwärtsbewegung des Frontspoilers (3) zu dienen, und eine hintere Kante (4c), die um eine Querachse (B) schwenkbar an der Kraftfahrzeugstruktur montiert ist,
- eine Feder (5), die zwischen der Kraftfahrzeugstruktur und der Hauptplatte (4) angeordnet ist und dazu tendiert, die Hauptplatte (4) und somit auch den Frontspoiler (3) in Richtung auf eine abgesenkte Position zu drücken,
- eine Wickelwelle (7) zum Aufwickeln von Hebekabeln (9) zum Anheben der Frontplatte (4), wobei die Welle unter der Fahrzeugkarosserie um eine Querachse drehbar montiert ist und durch einen Elektromotor (M) gesteuert wird, um die Hauptplatte (4) gegen die Wirkung der Feder (5) in Richtung auf eine angehobene Position vorzuspannen.

2. Vorrichtung nach Anspruch 1, **dadurch gekennzeichnet, dass** die Feder (5) eine Blattfeder ist, die in Bezug auf Längsrichtung des Kraftfahrzeugs quer angeordnet ist und deren mittlerer Teil mit der Kraftfahrzeugstruktur starr verbunden ist und deren Enden mit der Hauptplatte (4) zusammenwirken.

3. Vorrichtung nach Anspruch 2, **dadurch gekennzeichnet, dass** die Welle (7) vorgesehen ist, um zwei Hebekabel (9) aufzuwickeln, die mit den Enden der Blattfeder (5) und/oder mit der Hauptplatte (4) verbunden sind.

4. Vorrichtung nach Anspruch 1, **dadurch gekennzeichnet, dass** die Hauptplatte (4) mit einer Öffnung (12) versehen ist, der eine Verschlussplatte (13) zugeordnet ist, die als Ergebnis der Bewegung der Hauptplatte (4) in Richtung auf ihre abgesenkte Position von einer geöffneten Position in eine geschlossene Position zum Schließen der Öffnung (12) bewegt werden kann.

5. Vorrichtung nach Anspruch 4, **dadurch gekennzeichnet, dass** die Verschlussplatte an der Hauptplatte (4) zwischen ihrer geschlossenen Position und ihrer geöffneten Position gleitbar montiert ist, wobei die Verschlussplatte (13) durch Federmittel (15), die zwischen der Verschlussplatte und der Hauptplatte (4) angeordnet sind, in Richtung auf ihre geschlossenen Position vorgespannt ist, wobei die Wickelwelle mit wenigstens einem Hilfskabel (16) versehen ist, das mit der Verschlussplatte (13) verbunden ist, um die Verschlussplatte (13) gegen die Wirkung der Federmittel (15) in Richtung auf ihre geöffnete Position zu ziehen.

6. Vorrichtung nach Anspruch 5, **dadurch gekennzeichnet, dass** das wenigstens eine Hilfskabel (16), das mit der Verschlussplatte (13) verbunden ist, um eine Umlenkrolle (17) geführt wird und einen Endabschnitt (16a) aufweist, der mit der Verschlussplatte (13) verbunden ist und parallel zur Verschlussplatte (4) ausgerichtet ist.

7. Vorrichtung nach Anspruch 5, **dadurch gekennzeichnet, dass** die Hauptplatte (4) eine Längserstreckung aufweist, die wesentlich größer als die Längserstreckung des Frontspoilers (3) ist.

8. Vorrichtung nach Anspruch 1, **dadurch gekennzeichnet, dass** der Frontspoiler (3) dafür geeignet ist, an der vorderen Stoßstange (S1) des Kraftfahrzeugs montiert zu werden.

9. Vorrichtung nach Anspruch 1, **dadurch gekennzeichnet, dass** die Hauptplatte (4) dafür geeignet ist, an einem Rahmen (S2) montiert zu werden, der mit der Kraftfahrzeugkarosserie verbunden ist und die Komponenten der Vorderradaufhängung des Kraftfahrzeugs trägt.

10. Vorrichtung nach Anspruch 1, **dadurch gekennzeichnet, dass** die Feder (5) und der Elektromotor dafür geeignet sind, an einem Rahmen (S3) montiert zu werden, der den Kühler des Kühlsystems des Kraftfahrzeugs trägt.

## Revendications

1. Dispositif aérodynamique (1) pour un véhicule automobile, comprenant une structure de panneau (2) agencée sous la partie avant de la carrosserie d'un véhicule automobile et mobile entre une position surélevée et une position abaissée, où ladite structure de panneau (2) comporte un spoiler (3) monté en pivotement autour d'un axe transversal (A) sur la structure du véhicule automobile, ledit spoiler (3) étant sollicité élastiquement vers une position surélevée,
**caractérisé en ce que** ledit spoiler (3) est monté en pivotement autour dudit axe transversal (A) de manière adjacente à son bord avant, et **en ce que** ladite structure de panneau (2) comporte en outre :
- un panneau principal (4), ayant un bord avant (4e) en prise sur un bord arrière (3e) du spoiler (3), de manière à agir comme une butée pour le déplacement vers le haut du spoiler (3) et un bord arrière (4c) monté en pivotement autour d'un axe transversal (B) sur la structure du véhicule automobile,
- un ressort (5) interposé entre la structure de véhicule automobile et ledit panneau principal (4), tendant à pousser ledit panneau principal (4) et donc également ledit spoiler (3) vers une position abaissée,
- un arbre d'enroulement (7) pour enrouler des câbles de levage (9) pour soulever ledit panneau avant (4), ledit arbre étant monté en rotation sous la carrosserie du véhicule autour d'un axe transversal et étant commandé par un moteur électrique (M), pour solliciter ledit panneau principal (4) vers une position surélevée, contre l'action dudit ressort (5).

2. Dispositif selon la revendication 1, **caractérisé en ce que** ledit ressort (5) est un ressort à lames agencé transversalement par rapport à la direction longitudinale du véhicule automobile et ayant sa partie centrale reliée de manière rigide à la structure du véhicule automobile et ses extrémités coopérant avec ledit panneau principal (4).

3. Dispositif selon la revendication 2, **caractérisé en ce que** ledit arbre (7) est prévu pour l'enroulement de deux câbles de levage (9) reliés aux extrémités dudit ressort à lames (5) et/ou audit panneau principal (4).

4. Dispositif selon la revendication 1, **caractérisé en ce que** ledit panneau principal (4) est pourvu d'une ouverture (12) à laquelle est associé un panneau obturateur (13) pouvant se déplacer d'une position ouverte à une position fermée et, destiné à fermer ladite ouverture (12), suite au déplacement du panneau principal (4) vers sa position abaissée.

5. Dispositif selon la revendication 4, **caractérisé en ce que** ledit panneau obturateur est monté en coulissement sur le panneau principal (4) entre sa position fermée et sa position ouverte, ledit panneau obturateur (13) étant sollicité vers sa position fermée par un moyen de ressort (15) interposé entre ledit panneau obturateur et le panneau principal (4), ledit arbre d'enroulement étant pourvu d'au moins un câble auxiliaire (16) relié audit panneau obturateur (13) pour tirer ledit panneau obturateur (13) vers sa position ouverte, contre l'action dudit moyen de ressort (15).

6. Dispositif selon la revendication 5, **caractérisé en ce que** ledit au moins un câble auxiliaire (16) relié au panneau obturateur (13) est engagé sur une poulie de réorientation (17) et a une partie d'extrémité (16a) reliée au panneau obturateur (13) et orientée parallèlement au panneau obturateur (4).

7. Dispositif selon la revendication 5, **caractérisé en ce que** ledit panneau principal (4) a une longueur longitudinale essentiellement supérieure à la longueur longitudinale du spoiler (3).

8. Dispositif selon la revendication 1, **caractérisé en ce que** ledit spoiler (3) est adapté pour être monté sur le pare-chocs avant (S1) du véhicule automobile.

9. Dispositif selon la revendication 1, **caractérisé en ce que** ledit panneau principal (4) est adapté pour être monté sur un cadre (S2) relié à la carrosserie de véhicule automobile et portant les composants de la suspension avant du véhicule automobile.

10. Dispositif selon la revendication 1, **caractérisé en ce que** ledit ressort (5) et ledit moteur électrique sont adaptés pour être montés sur un cadre (S3) portant le radiateur du système de refroidissement du véhicule automobile.
